# EUROPEAN PATENT SPECIFICATION

(11) **EP 3 112 751 B1**
(45) Date of publication and mention of the grant of the patent: **26.09.2018**
(21) Application number: 15756074.9
(22) Date of filing: 19.02.2015
(51) Int. Cl.: F23C 99/00, B63B 27/24, F23G 7/06

(54) **MARINE BOILER COMPRISING AN EXHAUST GAS RECIRCULATION SYSTEM AND EXHAUST GAS RECIRCULATION METHOD**
MARINE KESSEL UMFASSEND EIN ABGASRÜCKFÜHRUNGSSYSTEM UND ABGASRÜCKFÜHRUNGSVERFAHREN
CHAUDIÈRE DE NAVIRE MUNIE UN SYSTÈME DE RECIRCULATION DE GAZ D'ÉCHAPPEMENT ET PROCÉDÉ DE RECIRCULATION DE GAZ D'ÉCHAPPEMENT

(30) Priority: 25.02.2014 JP 2014034147
(43) Date of publication of application: 04.01.2017
(73) Proprietor: Mitsubishi Heavy Industries, Ltd., Tokyo 108-8215 (JP)
(72) Inventor: TERAHARA, Takazumi, Nagasaki-shi Nagasaki 850-8610 (JP)
(74) Representative: Hoffmann Eitle
(86) International application number: PCT/JP2015/054556
(87) International publication number: WO 2015/129536

(56) References cited:
- EP-A2- 0 953 543
- WO-A1-2011/092450
- WO-A1-2011/092450
- WO-A1-2013/162965
- JP-A- S5 733 091
- JP-A- H11 509 891
- JP-A- 2002 332 919
- JP-A- 2007 099 817
- JP-A- 2007 175 594
- JP-A- 2009 061 402
- JP-U- S 566 918
- US-A- 5 511 971

## Description

### [Technical Field]

The present invention relates to a marine boiler comprising an exhaust gas recirculation system, and an exhaust gas recirculation method.

### [Background Art]

It has been known that in a case where exhaust gas recirculation is performed in a large internal combustion engine, such as a marine engine in order to reduce nitrogen oxide (hereinafter referred to as "NOx"), exhaust gas treatment is performed using a scrubber since sulfur oxide (hereinafter referred to as "SOx") etc. contained in exhaust gas has harmful effects, such as corrosion and clogging, on the internal combustion engine.

In the following Japanese Unexamined Patent Application, Publication No. 2002-332919, there is described an exhaust gas recirculation system that cleans exhaust gas discharged from an engine of a ship with a scrubber, removes soot and dust, and SOx from the exhaust gas, and circulates the cleaned exhaust gas.

EP 0 953 543 A2 describes a thermochemical regenerative heat recovery process in which a furnace is provided having at least two regenerator beds for heat recovery. While a first bed is being heated by hot flue gases produced by combusting a fuel and an oxidant in the furnace, a second bed, heated during a previous cycle, is cooled through carrying out an endothermic chemical reaction therein.

WO 2011/092450 A1 discloses an exhaust gas recirculation system with a path for discharging exhaust gas burned in a burner and making the burned exhaust gas flow through a crude oil tank as inert gas. A second path is provided that makes vent gas comprising a mixture of VOC and inert gas generated from the crude oil tank flow into a burner of a boiler. This device is especially used on oil tankers or another oil handling facilities such as FSO vessels and FPSO vessels, or in refineries or other plants producing or using liquid hydrocarbons. WO 2011/092450 A1 constitutes the closest prior art.

### [Summary of Invention]

### [Technical Problem]

However, in FPSO (Floating Production, Storage and Offloading), FSO (Floating Storage and Offloading system), and ships, such as a tanker, since there are no regulations on NOx discharged from boilers, an NOx reduction technique generally used in land boilers etc. has not been employed, and positive NOx reduction has not been achieved.

The present invention has been made in view of such circumstances, and an object thereof is to provide a marine boiler comprising an exhaust gas recirculation system, and an exhaust gas recirculation method that can suppress to the minimum exhaust gas recirculation systems to be added, and can reduce NOx discharged from the marine boiler.

### [Solution to Problem]

This object is solved by an exhaust gas recirculation system applied to a boiler with the features of claim 1 and an exhaust gas recirculation method with the features of claim 3. A first aspect of the present invention provides an exhaust gas recirculation system including: a first path that branches from a path for discharging exhaust gas burned in the boiler, and makes the burned exhaust gas flow through a crude oil tank as inert gas through a scrubber; a second path that makes VOC gas generated from the crude oil tank flow inside a furnace of the boiler or through a burner that is an ignition device of the boiler; and a third path that connects a portion of the first path closer to a downstream side than the scrubber with the second path, in which in a case where a generation amount of the VOC gas from the crude oil tank is not more than a predetermined value, the inert gas is made to flow through the third path, and is supplied into the furnace of the boiler or to the burner.

According to the first aspect of the present invention, the inert gas that flows through the first path branching from the path for discharging the boiler exhaust gas burned in the boiler is fed to the crude oil tank through the scrubber, and the VOC gas that flows through the second path is fed through a filter from the crude oil tank to the boiler or the burner that is the ignition device of the boiler. Since the VOC gas is hardly generated in a case where handling work of crude oil in the crude oil tank is performed, the generation amount of the VOC gas becomes not more than the predetermined value at which the VOC gas is not treated, and thus, the inert gas that is discharged from the boiler and flows through the scrubber is supplied to the boiler or the burner through the third path in which the portion of the first path closer to the downstream side than the scrubber and a portion of the second path closer to an upstream side than the filter have been connected to each other, and the second path.

In the case where the handling work of the crude oil is performed, the boiler is operated with a high load, but a lot of NOx is generated at this time. In the present invention, a fact is focused on in which VOC is not generated at the time of the handling work of the crude oil, the second path is set to be utilized for a period in which the VOC gas is not treated, the inert gas is made to flow through the second path and the third path, and thereby the inert gas is supplied to the boiler. According to this configuration, there is no need to separately mount an exhaust gas recirculation line, a fan, and an exhaust gas recirculation burner that are conventionally needed, the exhaust gas recirculation systems can be suppressed to the minimum, and reduction in construction period and cost can be achieved.

In addition, since removal of a sulfur content and lowering of an exhaust gas temperature by the scrubber can be expected, the inert gas that has flowed through the scrubber is supplied to the boiler through the third path and the second path, thereby a cooling (lowering) effect of a flame temperature in the boiler is high since the exhaust gas temperature is low, and the inert gas can suppress damage caused by corrosion of pipes serving as the flow paths.

Note that the generation amount of the VOC gas from the crude oil tank is, for example, determined by a VOC concentration in the crude oil tank.

A further aspect of the present invention provides an exhaust gas recirculation method of a marine boiler that makes inert gas after cleaning flow inside a furnace of a boiler or through a burner that is an ignition device of the boiler, the inert gas being the one in the exhaust gas generated in the boiler, in a case where a generation amount of VOC gas from a crude oil tank is not more than a predetermined value.

### [Advantageous Effects of Invention]

According to the present invention, effects are exerted in which the exhaust gas recirculation systems to be added can be suppressed to the minimum, and in which NOx discharged from the marine boiler can be reduced.

### [Brief Description of Drawings]

[Fig. 1]

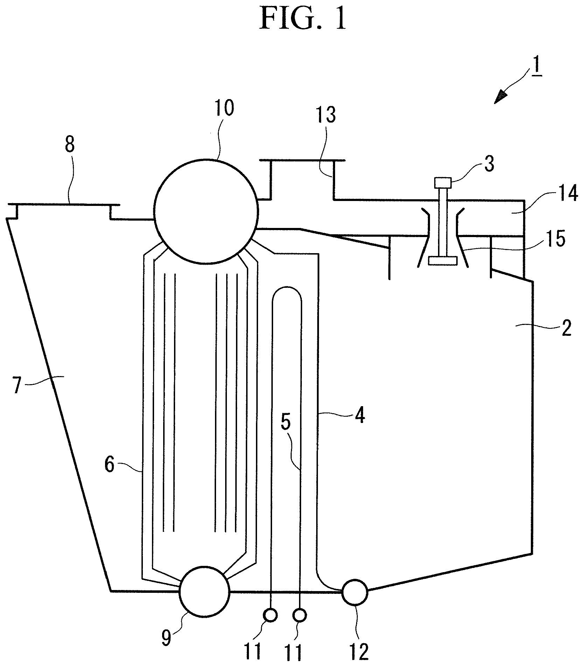

   Fig. 1 is a longitudinal cross-sectional view showing a marine boiler according to the present invention.
[Fig. 2]

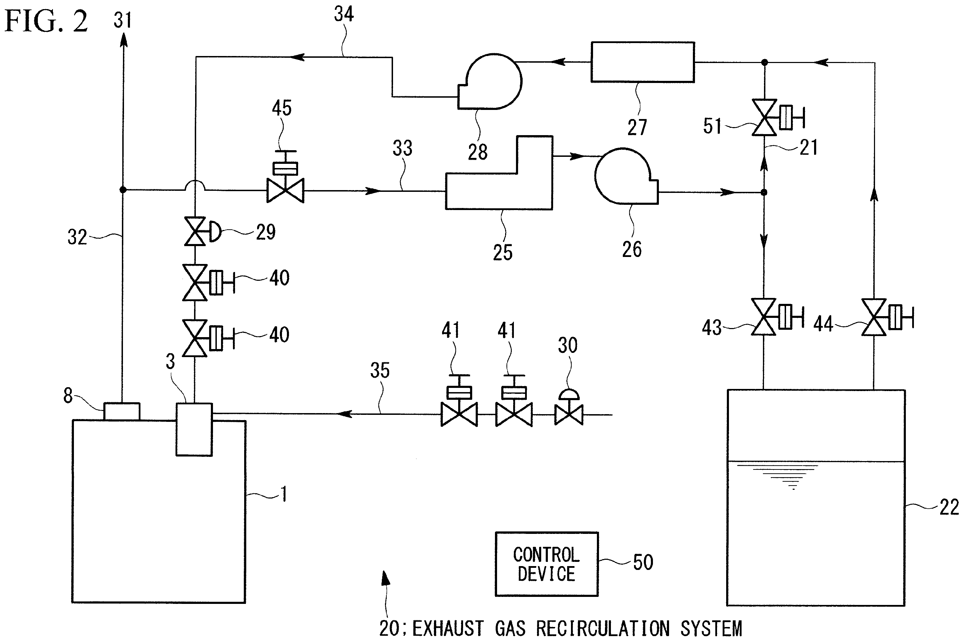

   Fig. 2 is an overall schematic configuration diagram of an exhaust gas recirculation system applied to the marine boiler according to the present invention.
[Fig. 3]

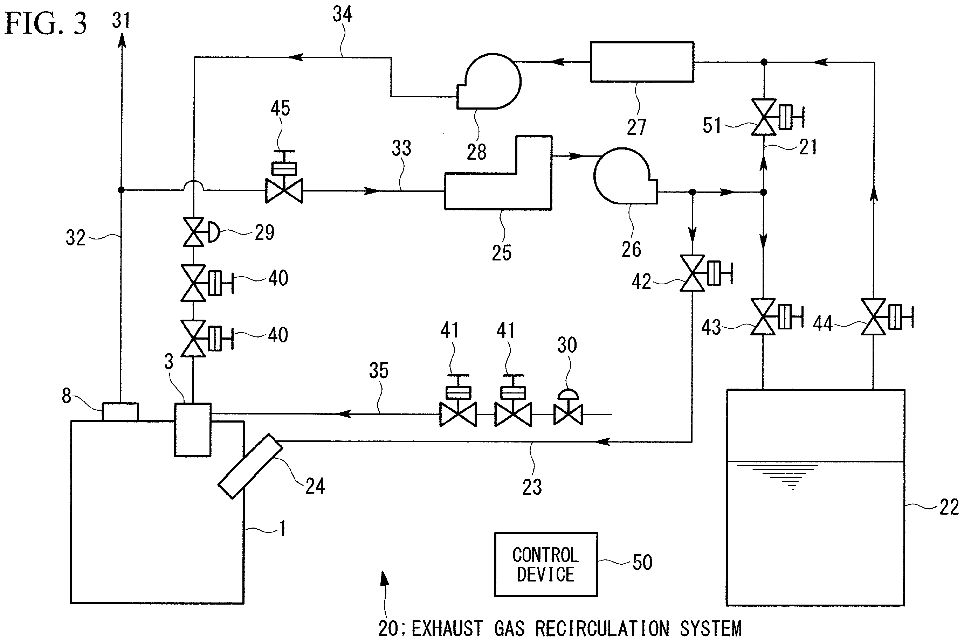

   Fig. 3 is an overall schematic configuration diagram of a modified example of the exhaust gas recirculation system applied to the marine boiler according to the present invention.

### [Description of Embodiments]

Hereinafter, there will be explained an exhaust gas recirculation system, a marine boiler including the same, and an exhaust gas recirculation method according to one embodiment of the present invention with reference to drawings.

In a marine boiler 1 shown in Fig. 1, a plurality of burners 3 are installed in a wind box 14 installed at an upper part of a furnace 2. The burner 3 burns fuel to generate combustion gas using combustion air introduced through an air duct 13. The generated hot combustion gas passes through a front bank tube 4, a heater 5, and an evaporation tube group (a rear bank tube) 6 that are disposed on a downstream of the furnace 2 in that order, and performs heat exchange with a fluid, such as water that flows in the tubes. The combustion gas in which heat exchange has been ended in this way passes through a gas duct 7 of an outlet side, and is discharged from a gas outlet 8 to an outside of the marine boiler 1. In addition, the marine boiler 1 includes: a water drum 9 provided on a lower side of the evaporation tube group 6; a steam drum 10 provided on an upper side of the evaporation tube group 6; and headers 11 and 12 connected to the front bank tube 4.

Fig. 2 is a schematic configuration diagram of an exhaust gas recirculation system 20 applied to a marine boiler according to the present invention. As shown in Fig. 2, the exhaust gas recirculation system 20 includes: a first inert gas line (a first path) 33; a VOC (Volatile Organic Compounds) gas line (a second path) 34; an inert gas bypass line (a third path) 21; a main fuel line 35; and a control device 50.

The main fuel line 35 supplies to the boiler 1 boiler main fuel (for example, HFO (Heavy Fuel Oil) and MDO (Marine Diesel Oil), methane, etc.). The main fuel line 35 further includes a shut-off valve 41 and a control valve 30. An opening of the control valve 30 is adjusted by a command from the control device 50, and thereby the control valve 30 controls an amount of the boiler main fuel supplied to the boiler 1.

The first inert gas line 33 includes: a shut-off valve 45; an inert gas scrubber (a scrubber) 25; an inert gas blower (a blower) 26; and a shut-off valve 43. In a case where unloading work of crude oil from a crude oil tank is performed, the first inert gas line 33 branches exhaust gas burned in the boiler 1 from a path 32 for discharging the exhaust gas to a funnel 31, and makes inert gas flow to a downstream side (a crude oil tank 22) by the inert gas blower 26 through the inert gas scrubber 25. The exhaust gas contains carbon dioxide, nitrogen, soot, NOx, SOx, etc.

The VOC gas line 34 includes: a shut-off valve 44; a VOC gas filter (a filter) 27; a VOC blower (a blower) 28; a control valve 29; and a shut-off valve 40. In a case where loading work of crude oil to the crude oil tank 22 is performed, the VOC gas line 34 makes the inert gas and VOC gas flow inside a furnace of the boiler 1 or the burner 3 that is an ignition device of the boiler 1 through the VOC gas filter 27 from the crude oil tank 22. In addition, the VOC gas line 34 includes the control valve 29 on a downstream side of the VOC blower 28 and closer to an upstream side than the shut-off valve 40, and an opening of the control valve 29 is controlled and adjusted by the control device 50. In a case where the inert gas and the VOC gas flow through the VOC gas line 34, the opening of the control valve 29 is adjusted, and thereby an inert gas flow rate supplied to the boiler 1 or the burner 3 can be adjusted. After that, combustion treatment of the VOC gas supplied to the burner 3 is performed.

The inert gas bypass line 21 bypasses and connects a downstream side of the inert gas blower 26 of the first inert gas line 33 and an upstream side of the VOC gas filter 27 of the VOC gas line 34. The inert gas bypass line 21 includes a shut-off valve 51, and sets the shut-off valve 51 to be open so that the inert gas flows through the inert gas bypass line 21 in a case where unloading work of crude oil from the crude oil tank 22 is performed. When the shut-off valve 51 is set to be open, the inert gas that has flowed through the first inert gas line 33 and has been fed from the inert gas blower 26 is made to flow through the VOC gas line 34 through the inert gas bypass line 21. After that, the inert gas is supplied to the burner 3, and supplied to the boiler 1. Although the boiler 1 is operated with a high load in a case where unloading work of crude oil is performed, the inert gas is supplied to the boiler 1, and thereby Nox reduction is achieved.

In addition, in the case where the loading work of the crude oil to the crude oil tank 22 is performed, the shut-off valve 51 is set to be closed.

In a case where a generation amount of the VOC gas from the crude oil tank 22 is not more than a predetermined value, the control device 50 makes the inert gas flow through the inert gas bypass line 21, and makes the inert gas supplied into the furnace of the boiler 1 or the burner 3. Specifically, in the case where the unloading work of the crude oil from the crude oil tank 22 is performed, the VOC gas is hardly generated, and the generation amount of the VOC gas becomes not more than the predetermined value. Therefore, the control device 50 controls the control valve 29 to be open, controls the shut-off valve 51 to be open, makes the inert gas flow through the inert gas bypass line 21, and makes the inert gas supplied to the boiler 1 or the burner 3. In addition to the above, the control device 50 appropriately controls the shut-off valves and the control valves, and adjusts openings thereof.

Hereinafter, an action of the exhaust gas recirculation system 20 according to the embodiment will be explained using Figs. 1 and 2.

Exhaust gas burned in the boiler 1 is discharged from the gas outlet 8, and flows through the path 32. The exhaust gas flows through the first inert gas line 33 that has branched between the path 32 and the funnel 31, and is cleaned by scrubber water in the inert gas scrubber 25, a sulfur content is removed from the exhaust gas, and an exhaust gas temperature is lowered by cooling water. The exhaust gas burned in the boiler 1 is fed to the crude oil tank 22 by the inert gas blower 26 as inert gas.

In a case where the VOC gas is burned in the boiler 1, by the control device 50, the shut-off valve 43 is controlled in a closing direction, the shut-off valve 51 in a closing direction, the shut-off valve 44 in an opening direction, and the shut-off valve 40 in an opening direction. In this way, the VOC gas is fed to the VOC gas line 34 from the crude oil tank 22, and is fed from the VOC blower 28 to the burner 3 through the VOC gas filter 27. The required boiler main fuel and VOC gas are supplied from the burner 3 according to a required steam amount of the boiler, and are burned in the boiler 1, and exhaust gas is generated. The exhaust gas is discharged from the exhaust gas outlet 8, is discharged from the funnel 31, and the exhaust gas cleaned by the inert gas scrubber 25 flows through the first inert gas line 33 as inert gas.

In a case where unloading work of crude oil of the crude oil tank 22 is performed, by the control device 50, the shut-off valve 51 is controlled in an opening direction, and the control valve 29 is controlled in an opening direction. In addition, at this time, the shut-off valve 43 is controlled in an opening direction, and the shut-off valve 44 is controlled in a closing direction. The inert gas that is cleaned in the inert gas scrubber 25 that flows through the first inert gas line 33, and whose temperature is lowered by the cooling water after cleaning flows through the inert gas bypass line 21, and is fed to the VOC gas line 34 and the crude oil tank 22. 10 to 30% of an inert gas flow rate that flows through the first inert gas line 33 flows through the inert gas bypass line 21, and the other (90 to 70%) of the inert gas flow rate is fed to the crude oil tank 22.

Note that although the lowered temperature of the inert gas depends on a piping design temperature, it may just be approximately not more than 80°C.

In the case where the unloading work of the crude oil from the crude oil tank 22 is performed, since the VOC gas is hardly generated, a generation amount thereof becomes not more than a predetermined value, and thus the VOC gas is not treated. Therefore, the inert gas whose temperature has been lowered by being cleaned in the inert gas scrubber 25 in a state where the shut-off valve 51 is opened flows through the VOC gas line 34, and is supplied to the burner 3.

Here, being not more than the predetermined value at which treatment of the VOC gas is not needed, for example, means a state where continuous increase of the VOC gas is not substantially confirmed, such as a state where a VOC concentration in the crude oil tank 22 is not more than several ten ppm.

As described above, the exhaust gas generated in the boiler 1 is cleaned in the inert gas scrubber 25, after the cleaning, the exhaust gas is lowered in temperature by the cooling water to be the inert gas, and the inert gas can be recirculated through the boiler 1. Since an oil pump works at the time of the unloading work of the crude oil, the boiler becomes a high-load state, and a large amount of Nox is generated, an Nox reduction effect by exhaust gas recirculation can be expected.

As explained above, according to the exhaust gas recirculation system 20, the marine boiler including the same, and the exhaust gas recirculation method, although the boiler 1 is operated with the high load in the case where the unloading work of the crude oil is performed, a large amount of NOx is generated at this time. In the present invention, a fact is focused on in which VOC gas is hardly generated at the time of the unloading work of the crude oil, the VOC gas line 34 is set to be utilized for a period in which the VOC gas is not treated, the inert gas is made to flow through the VOC gas line 34 and the inert gas bypass line 21, and thereby the inert gas is supplied to the boiler 1. As described above, since the inert gas is supplied to the boiler 1 diverting the existing VOC gas line 34, there needs little facility cost. Therefore, the exhaust gas recirculation systems are suppressed to the minimum, and reduction in construction period and cost can be achieved.

In addition, since removal of the sulfur content and lowering of the exhaust gas temperature by the inert gas scrubber 25 can be expected, the inert gas that has flowed through the inert gas scrubber 25 is supplied to the boiler 1 through the inert gas bypass line 21 and the VOC gas line 34, thereby a cooling (lowering) effect of a flame temperature in the boiler 1 is high since the exhaust gas temperature is low, and the inert gas can suppress damage caused by corrosion of pipes serving as the flow paths. In addition, by controlled as described above, NOx can be reduced by up to approximately 20 to 35% compared with a conventional marine boiler.

Note that although the VOC gas line 34 is connected to the burner 3 in Fig. 2 showing the embodiment, the present invention is not limited to this, and the VOC gas line 34 may be connected to the boiler 1.

In addition, the wind box or the air duct may be equipped with a nozzle 24, and thereby the inert gas may be supplied.

### [Modified example]

Although in the above-described embodiment, the inert gas is supplied to the boiler 1 through the inert gas bypass line 21 in which the first inert gas line 33 and the VOC gas line 34 have been bypassed and connected to each other, a configuration that supplies the inert gas to the boiler 1 is not limited to this. For example, as shown in Fig. 3, in addition to the configuration of the above-described embodiment, a second inert gas line 23 may be provided that is branched from the downstream side of the inert gas blower 26 of the first inert gas line 33, and is connected to the boiler 1.

The second inert gas line 23 is branched from the downstream side of the inert gas blower 26 of the first inert gas line 33, the boiler 1 (or the burner 3) is equipped with the nozzle 24 provided at a tip of the second inert gas line 23, and inert gas is supplied into the furnace of the boiler 1 (or the burner 3).

In the case where the unloading work of the crude oil from the crude oil tank 22 is performed, by the control device 50, the shut-off valve 42 is controlled in an opening direction, the shut-off valve 43 in an opening direction, and the shut-off valves 51, 44, and 40 in closing directions. In that case, the inert gas flows through the second inert gas line 23 branching from the downstream side of the inert gas blower 26 of the first inert gas line 33, and is cleaned. The inert gas whose temperature has been lowered by being cleaned is supplied to the boiler 1 through the nozzle 24. In addition, the inert gas is supplied to the crude oil tank 22 through a path linked to the crude oil tank 22 on the downstream side of the inert gas blower 26 of the first inert gas line 33.

The modified example has a configuration in which the second inert gas line 23 and the nozzle 24 are added. When the modified example and the case of diverting the VOC gas line 34 through the inert gas bypass line 21 explained in the above-described embodiment are compared with each other, cost can be more suppressed in the case of supplying the inert gas to the boiler 1 diverting the VOC gas line 34 through the inert gas bypass line 21.

Hereinbefore, although one embodiment of the present invention has been explained, the present invention is not limited to the above-mentioned embodiment, and various modifications can be carried out without departing from the scope of the invention.

### [Reference Signs List]

- 1: boiler
- 20: exhaust gas recirculation system
- 21: inert gas bypass line (third path)
- 22: crude oil tank
- 25: inert gas scrubber
- 33: first inert gas line (first path)
- 34: VOC gas line (second path)
- 50: control device

## Claims

1. A marine boiler (1) comprising an exhaust gas recirculation system, comprising:
a crude oil tank (22),
a scrubber (25),
a path (32) for discharging exhaust gas burned in said boiler (1),
a first path (33) that branches from said path (32) and makes the burned exhaust gas flow through the scrubber (25) to the crude oil tank (22) as inert gas;
a second path (34) that makes VOC gas generated from the crude oil tank (22) flow inside a furnace (2) or through a burner (3) that is an ignition device of the boiler (1);
a third path (21) that connects a portion of the first path (33) closer to a downstream side than the scrubber (25) with the second path (34); and
a control device (50) adapted to make the inert gas flow through the third path (21), and to supply the inert gas into the furnace (2) or to the burner (3) of the boiler (1) in a case where a generation amount of the VOC gas from the crude oil tank (22) is not more than a predetermined value at which treatment of the VOC gas is not needed.

2. A marine boiler (1) according to claim 1, wherein the scrubber (25) is configured to lower a temperature of the inert gas to not more than 80°C.

3. An exhaust gas recirculation method comprising:
a first step of branching exhaust gas burned by a marine boiler (1) from a path (32) for discharging the exhaust gas;
a second step of making the exhaust gas flow through a scrubber (25) to a crude oil tank (22) as inert gas after the exhaust gas is branched from the path (32) ;
a third step of making VOC gas generated from the crude oil tank (22) flow inside a furnace of the boiler (1) or through a burner (3) that is an ignition device of the boiler (1); and
a fourth step of making inert gas cleaned by the scrubber (25) flow inside the furnace of the boiler (1) or through the burner (3) through a path (34) through which the VOC gas has flowed in the third step, the inert gas being the one in the exhaust gas generated in the boiler (1), in a case where a generation amount of VOC gas from a the crude oil tank (22) is not more than a predetermined value at which treatment of VOC gas is not needed.

## Patentansprüche

1. Schiffskessel (1), der ein Abgasrückführungssystem umfasst, umfassend:
einen Rohöltank (22),
einen Wäscher (25),
einen Pfad (32) zum Ausstoßen von in dem Kessel (1) verbrannten Abgas,
einen ersten Pfad (33), der von dem Pfad (32) abzweigt und das verbrannte Abgas als Inertgas durch den Wäscher (25) zum Rohöltank (22) strömen lässt;
einen zweiten Pfad (34), der erzeugtes VOC-Gas aus dem Rohöltank (22) in einen Ofen (2) oder durch einen Brenner (3) strömen lässt, der eine Zündvorrichtung des Kessels (1) ist;
einen dritten Pfad (21), der einen Abschnitt des ersten Pfades (33) enger mit einer stromabwärtigen Seite verbindet als den Wäscher (25) mit dem zweiten Pfad (34); und
eine Steuervorrichtung (50), die dazu ausgebildet ist, das Inertgas durch den dritten Pfad (21) strömen zu lassen und das Inertgas dem Ofen (2), oder dem Brenner (3) des Kessels (1) zuzuführen in einem Fall, in dem eine Erzeugungsmenge des VOC-Gases aus dem Rohöltank (22) nicht mehr als einen vorbestimmten Wert beträgt, bei dem Behandlung des VOC-Gases nicht erforderlich ist.

2. Schiffskessel (1) nach Anspruch 1, wobei der Wäscher (25) dazu konfiguriert ist, eine Temperatur des Inertgases auf nicht mehr als 80 °C zu senken.

3. Abgasrückführungsverfahren, umfassend:
einen ersten Schritt des Abzweigens von Abgas, das von einem Schiffskessel (1) verbrannt wurde, aus einem Pfad (32) zum Ausstoßen des Abgases;
einen zweiten Schritt des Strömenlassens des Abgases als Inertgas durch einen Wäscher (25) zu einem Rohöltank (22), nachdem das Abgas aus dem Pfad (32) abgezweigt wurde;
einen dritten Schritt des Strömenlassens von erzeugtem VOC-Gas aus dem Rohöltank (22) in einen Ofen des Kessels (1) oder durch einen Brenner (3), der eine Zündvorrichtung des Kessels (1) ist; und
einen vierten Schritt des Strömenlassens von Inertgas, das vom Wäscher (25) gereinigt wurde, in den Ofen des Kessels (1), oder durch den Brenner (3) durch einen Pfad (34), durch den das VOC-Gas im dritten Schritt geströmt ist, wobei das Inertgas in einem Fall, in dem eine Erzeugungsmenge von VOC-Gas aus dem Rohöltank (22) nicht mehr als einen vorbestimmten Wert beträgt, bei dem Behandlung von VOC-Gas nicht erforderlich ist, jenes im Abgas ist, das im Kessel (1) erzeugt wurde.

## Revendications

1. Chaudière marine (1) comprenant un système de recirculation de gaz d'échappement, comprenant :
un réservoir de pétrole brut (22),
un épurateur (25),
une voie (32) d'évacuation de gaz d'échappement brûlé dans ladite chaudière (1),
une première voie (33) qui se ramifie depuis ladite voie (32), et fait s'écouler le gaz d'échappement brûlé à travers l'épurateur (25) vers le réservoir de pétrole brut (22) en tant que gaz inerte ;
une deuxième voie (34) qui fait s'écouler du gaz VOC généré depuis le réservoir de pétrole brut (22) à l'intérieur d'un foyer (2) ou à travers un brûleur (3) qui est un dispositif d'allumage de la chaudière (1) ;
une troisième voie (21) qui relie une partie de la première voie (33) plus proche d'un côté en aval que l'épurateur (25) à la deuxième voie (34) ; et
un dispositif de commande (50) adapté pour faire s'écouler le gaz inerte à travers la troisième voie (21), et pour fournir le gaz inerte dans le foyer (2) ou vers le brûleur (3) de la chaudière (1) dans un cas où une quantité de génération du gaz VOC issu du réservoir de pétrole brut (22) n'est pas supérieure à une valeur prédéterminée à laquelle un traitement du gaz VOC n'est pas nécessaire.

2. Chaudière marine (1) selon la revendication 1, dans laquelle l'épurateur (25) est configuré pour abaisser une température du gaz inerte à pas plus de 80 °C.

3. Procédé de recirculation de gaz d'échappement comprenant :
une première étape consistant à faire bifurquer du gaz d'échappement brûlé par une chaudière marine (1) depuis une voie (32) d'évacuation du gaz d'échappement ;
une deuxième étape consistant à faire s'écouler le gaz d'échappement à travers un épurateur (25) vers un réservoir de pétrole brut (22) en tant que gaz inerte après que le gaz d'échappement a été bifurqué depuis la voie (32) ;
une troisième étape consistant à faire s'écouler du gaz VOC généré depuis le réservoir de pétrole brut (22) à l'intérieur d'un foyer de la chaudière (1) ou à travers un brûleur (3) qui est un dispositif d'allumage de la chaudière (1) ; et
une quatrième étape consistant à faire s'écouler du gaz inerte nettoyé par l'épurateur (25) à l'intérieur du foyer de la chaudière (1) ou à travers le brûleur (3) à travers une voie (34) à travers laquelle le gaz VOC s'est écoulé dans la troisième étape, le gaz inerte étant celui des gaz d'échappement généré dans la chaudière (1), dans un cas où une quantité de génération de gaz VOC issu du réservoir de pétrole brut (22) n'est pas supérieure à une valeur prédéterminée à laquelle un traitement de gaz VOC n'est pas nécessaire.
